(19) Europäisches Patentamt
European Patent Office
Office européen des brevets

(11) **EP 1 665 443 B1**

(12) **EUROPÄISCHE PATENTSCHRIFT**

(45) Veröffentlichungstag und Bekanntmachung des Hinweises auf die Patenterteilung:
**01.10.2008 Patentblatt 2008/40**

(21) Anmeldenummer: **04786743.7**

(22) Anmeldetag: **09.09.2004**

(51) Int Cl.:
***H01M 8/24*** *(2006.01)*

(86) Internationale Anmeldenummer:
**PCT/DE2004/002021**

(87) Internationale Veröffentlichungsnummer:
**WO 2005/027253 (24.03.2005 Gazette 2005/12)**

(54) **BRENNSTOFFZELLE UND ZUGEHÖRIGES BRENNSTOFFZELLENMODUL**

FUEL CELL AND FUEL CELL MODULE THEREFOR

PILE A COMBUSTIBLE, ET MODULE DE PILE A COMBUSTIBLE CORRESPONDANT

(84) Benannte Vertragsstaaten:
**AT BE BG CH CY CZ DE DK EE ES FI FR GB GR HU IE IT LI LU MC NL PL PT RO SE SI SK TR**

(30) Priorität: **12.09.2003 DE 10342493**

(43) Veröffentlichungstag der Anmeldung:
**07.06.2006 Patentblatt 2006/23**

(73) Patentinhaber: **Clausthaler Umwelttechnik-Institut Gmbh (Cutec - Institut)**
**38678 Clausthal-Zellerfeld (DE)**

(72) Erfinder:
• **LESSING, Helmut**
**31157 Sarstedt (DE)**
• **BORCHARDT, Günter**
**38678 Clausthal-Zellerfeld (DE)**

(74) Vertreter: **Gerstein, Hans Joachim et al**
**Gramm, Lins & Partner GbR**
**Thodor-Heuss-Strasse 1**
**D-38122 Braunschweig (DE)**

(56) Entgegenhaltungen:
**DE-A1- 19 639 517         US-A- 4 345 009**
**US-A- 4 623 596**

## Beschreibung

Die Erfindung betrifft ein Brennstoffzellenmodul mit einer Vielzahl übereinander gestapelter permeabler Anoden- und Kathodenplatten, mit Elektrolytmaterial zwischen benachbarten Anoden- und Kathodenplatten, und mit Anschlüssen an den Anoden- und Kathodenplatten zur Zu- und Abfuhr von Gas und Brennstoff, wobei die Anodenplatten elektrisch parallel und die Kathodenplatten elektrisch parallel geschaltet sind.

Die Erfindung betrifft weiterhin eine aus mindestens zwei derartigen Brennstoffzellenmodulen gebildete Brennstoffzelle.

Brennstoffzellen zur Erzeugung elektrischer Energie durch elektrochemische Reaktion von Brennstoff und Gas sind hinreichend bekannt und werden beispielsweise zur Versorgung von Gebäuden oder Fahrzeugen eingesetzt. Bei den sogenannten "Solid Oxide Fuel Cells" SOFC wird eine Zelle eines Brennstoffzellenmoduls aus übereinandergeschichteter permeabler Anodenplatte, impermeabler Elektrolyt-Zwischenschicht und permeabler Kathodenplatte gebildet. Durch die Kathodenplatte wird Sauerstoff und durch die Anodenplatte Brennstoff, z.B. $H_2 + CO$, geleitet. Dabei wandern negativ geladene Sauerstoffionen von der Kathodenplatte durch die ionenleitende Elektrolyt-Zwischenschicht und reagieren in der Anodenplatte mit dem Wasserstoff, wodurch Wasser gebildet wird ($2H_2 + 2O^= => 4e^- + 2H_2O$). Von der Kathodenplatte werden entsprechend der vier an dem elektrischen Anschluss der Anodenplatte abgegebenen Elektroden vier Elektroden aufgenommen ($O_2 + 4e^- => 2O^=$). Das Wasser reagiert mit dem Kohlenmonoxid, wobei Wasserstoff und Kohlendioxid gebildet wird ($CO + H_2O => H_2 + CO_2$). Am Auslass der Anodenplatten wird Wasser und Kohlendioxid sowie Wärme abgegeben ($H_2O + CO_2$).

Herkömmlicherweise werden zur Erhöhung der Ausgangsspannung die einzelnen Zellen der Brehnstoffzellenmodule sowie die Brennstoffzellenmodule einer Brennstoffzelle in Reihe geschaltet.

Bei den erforderlichen Stapeln mit etwa 30 und mehr Zellenschichten und den auftretenden hohen Temperaturen und Temperaturschwankungen treten Probleme mit der Gasdichtigkeit und der elektrischen Leistungsabnahme durch Degradation auf. Zudem ist die Temperatursteuerung von etwa 850 bis 950°C problematisch. In den unterschiedlichen Metall- und Keramikschichten kann es zudem zu Spannungsrissen aufgrund von Temperaturschwankungen kommen.

In der EP 0 947 019 B1 und DE 40 11 506 A1 ist eine Brennstoffzelle beschrieben, bei der Gas- und Brennstoff durch einen gesamten Plattenstapel zugeführt wird.

Die WO 01/29923 A1 beschreibt Einzel-Brennstoffzellen, die mit Rohranschlüssen für die Gaszufuhr und Gasabfuhr miteinander verbunden werden können. Unabhängig davon sind an den Stirnseiten elektrische Anschlüsse vorgesehen.

In dem US-Patent 5,069,985 ist ein kreuzweise gestapeltes Brennstoffzellenmodul beschrieben, das seriell verschaltet ist und an jeder Stirnseite eine gemeinsame Gaszufuhr, Gasabfuhr, Brennstoffzufuhr oder Brennstoffabfuhr hat. Die Brennstoffzellen sind elektrisch in Serie verschaltet, so dass die Zu- und Abfuhranschlüsse elektrisch isoliert an den Stirnseiten angeschlossen sind.

In der US 2003/0044657 A1 ist ein Brennstoffzellenstapel mit jeweils elektrisch parallel geschalteten Anoden- und Kathodenplatten beschrieben. Mit der Parallelschaltung wird erreicht, dass Wasserdampf nicht in dem Maße verdampft, wie bei der Serienschaltung. Die Gas- und Brennstoffzufuhr und -abfuhr erfolgt an der Ober- und Unterseite des Brennstoffzellenstapels. Dabei wird Gas und Brennstoff nachteilig durch den gesamten Stapel durchgeleitet, was zu unterschiedlichen Gas- und Brennstoffverteilungen führen kann.

US-A-4 623 596 beschreibt ein Brennstoffzellenmodul, welches aus einer Vielzahl von Brennstoffzellenstapeln besteht, die in Serie geschaltet sind. Die Gasverteilung wird über bipolare Platten vorgenommen, welche auf beiden Seiten Gaskanäle besitzen, wobei die Gaskanäle auf einer Seite jeweils zueinander parallel aber gegenüber den Gaskanälen der anderen Seite im rechten Winkel angeordnet sind. Die Versorgung eines Zellstapels mit Brenngas oder mit Oxidationsgas und der Abtransport dieser Reaktanten erfolgt über Anschlußstutzen. Diese sind jedoch vom Stapel mittels eines Dichtrings elektrisch isoliert.

US-A-4 345 009 gibt einen Brennstoffzellenstapel an, innerhalb dessen die Gasverteilung durch Kanäle in Platten vorgenommen wird, wobei das Brenngas und das Oxidationsgas zueinander im rechten Winkel geführt werden. Die Anschlußstutzen sind dabei vom Zellstapel elektrisch isoliert.

DE 196 39 517 behandelt ein Brennstoffzellsystem, welches aus einzelnen röhrenförmigen Brennstoffzellen besteht. Durch die Röhren wird Luft geleitet. Das Brenngas wird zwischen den Röhren geführt, wobei innerhalb des Brennstoffzellsystems die Richtung des Brenngases rechtwinklig zu der der Luft sein kann. Durch einen Metallfilz werden dabei einzelne Brennstoffzellen anodenseitig parallel geschaltet.

Aufgabe der Erfindung ist es daher, ein verbessertes Brennstoffzellenmodul mit einer Vielzahl übereinander gestapelter permeabler Anoden- und Kathodenplatten, mit Elektrolytmaterial zwischen benachbarten Anoden- und Kathodenplatten, und mit Anschlüssen an den Anoden- und Kathodenplatten zur Zu- und Abfuhr von Gas und Brennstoff zu schaffen, wobei die Anodenplatten elektrisch parallel und die Kathodenplatten elektrisch parallel geschaltet sind.

Die Aufgabe wir mit dem gattungsgemäßen Brennstoffzellenmodul erfindungsgemäß dadurch gelöst, dass die Anodenplatten und Kathodenplatten jeweils sich in Längsrichtung erstreckende parallele Röhren zur Durchleitung von Gas oder Brennstoff haben. Die Längsachsen der Anodenplatten sind im Winkel versetzt zu den Längsachsen der Kathodenplatten ausgerichtet und an den Stirnseiten der Anoden- und Kathodenplatten sind metallische Anschlussstutzen angeordnet, die mit den parallelen Röhren jeweils zur Zufuhr oder Abfuhr von Gas kommunizieren.

Die an einer gemeinsamen Stirnseite jeweils befindlichen Anoden - oder Kathodenplatten sind dabei mit den Anschlussstutzen elektrisch parallel geschaltet und an eine gemeinsame Zuleitung oder Ableitung angeschlossen.

Im Unterschied zu den üblichen Brennstoffzellenmodulen mit seriell geschalteten Zellen sind, wie aus der US 2003/0044657 A1 bekannt ist, die Zellen parallel geschaltet. Dies hat zwar zunächst den Nachteil, dass die Spannung des Brennstoffzellenmoduls geringer als bei der herkömmlichen Serienschaltung ist. Der mit der Parallelschaltung verbundene Vorteil ergibt sich jedoch in Verbindung mit der an sich aus der US 5,069,985 bekannten Anordnung daraus, dass nunmehr sowohl die Gas- und Brennstoffzufuhr und -abfuhr als auch der elektrische Anschluss an den jeweiligen Stirnseiten der Anoden- und Kathodenplatten jeweils zusammengefasst werden kann.

Durch das Übereinanderstapeln mehrerer Anoden- und Kathodenplatten werden im Vergleich zu Einzellenmodulen die funktionellen Flächen verdoppelt, da die Ober- und Unterseite der Anoden- und Kathodenplatten für die elektrochemische Kopplung genutzt werden.

Vorzugsweise haben die Anoden- und Kathodenplatten eine rechteckige Grundfläche mit im Verhältnis zu den Stirnseiten längeren Längsseite, wobei die Anodenplatten parallel zueinander und die Kathodenplatten parallel zueinander ausgerichtet sind. Die Anoden- und Kathodenplatten sind zentriert angeordnet und die Längsachsen der Anodenplatten im Winkel versetzt zu den Längsachsen der Kathodenplatten ausgerichtet. Damit kann an jeder Seitenfläche des Brennstoffzellenmoduls eine einzige Zu- oder Abfuhrleitung für Gas oder Brennstoff angeordnet werden.

Besonders vorteilhaft für die getrennte Anordnung der Zu- und Abfuhranschlüsse ist es, wenn die Anoden- und Kathodenplatten kreuzartig zentriert angeordnet sind, wobei die Längsachsen der Anodenplatten im rechten Winkel zu den Längsachsen der Kathodenplatten ausgerichtet sind.

Es ist vorteilhaft, wenn an den Stirnseiten in den Räumen zwischen den übereinander liegenden Anschlussenden der Anoden- oder Kathodenplatten elektrisch leitendes Füllmaterial eingebracht ist, das die Räume vollständig ausfüllt. Dann kann die gemeinsame Zuleitung oder Ableitung einen sich über die Höhe des Brennstoffzellenmoduls und die Breite der zugeordneten Stirnseite erstreckenden Anschlussstutzen haben, so dass die Anoden- und Kathodenplatten trotz möglicher Temperaturschwankungen zuverlässig gasdicht angeschlossen werden können.

Weiterhin ist es vorteilhaft, wenn die Anodenplatten und die Kathodenplatten auf den Oberflächen der rechteckigen Grundfläche eine elektrisch isolierende ionenleitende Elektrolytschicht haben. Die Elektrolytschicht kann beispielsweise aus der Brennstoffzellentechnologie hinreichend bekanntes 8YSR oder ScSZ aufweisen.

Zwischen übereinander angeordneten Anodenplatten und Kathodenplatten kann zudem jeweils eine elektrisch isolierende, ionenleitende Zwischenschicht angeordnet sein. Damit wird die Permeabilität für Ionen erhöht und eine "Sollbruchstelle" im thermischen Gradienten geschaffen. Die Zwischenschicht kann beispielsweise aus der Brennstoffzellentechnologie bekanntes Nickel-8YSR oder $CeO_x/Ni$ aufweisen.

Die Anodenplatten können in bekannter Weise aus Cermet-Material, insbesondere Nickel-Cermet, und die Kathodenplatten aus Keramik-Material, insbesondere Perowskit (LSM bzw. $La_xSr_yCa_zMnO_3$) durch Brennen nach dem Formen von mit parallelen Röhren versehenen Plattenrohlingen gebildet werden.

Das Problem der relativ geringen Spannung der Brennstoffzellenmodule kann mit einer Leistungselektronikschaltung mit einem Strom-Spannungswandler zur Spannungsanhebung gelöst werden.

Die Aufgabe wird weiterhin mit einer Brennstoffzellenbatterie gelöst, indem mindestens zwei Brennstoffzellenmodule der vorhergehend beschriebenen Art elektrisch in Reihe geschaltet sind. Dabei werden die Brennstoffzellenmodule vorzugsweise übereinander gestapelt.

Die Erfindung wird nachfolgend beispielhaft anhand der beigefügten Zeichnungen näher erläutert. Es zeigen:

Fig. 1 - eine perspektivische Ansicht des Schichtaufbaus einer Einzelzelle aus Anodenplatte, Kathodenplatte, Elektrolytmaterial und Zwischenschichten;

Fig. 2 - eine perspektivische Ansicht eines Brennstoffzellenmoduls mit einer Vielzahl alternierend kreuzweise übereinandergestapelter Einzelzellen;

Fig. 3 - eine perspektivische Ansicht eines Brennstoffzellenmoduls mit kreuzweise übereinander gestapelten, parallel geschalteten Anoden- und Kathodenplatten und mit Anschlussstutzen an den Stirnseiten des Brennstoffzellenmoduls für die Gas- und Brennstoffzufuhr;

Fig. 4 - eine perspektivische Ansicht einer Brennstoffzelle mit einer Vielzahl übereinander gestapelter in Reihe geschalteter Brennstoffzellenmodule.

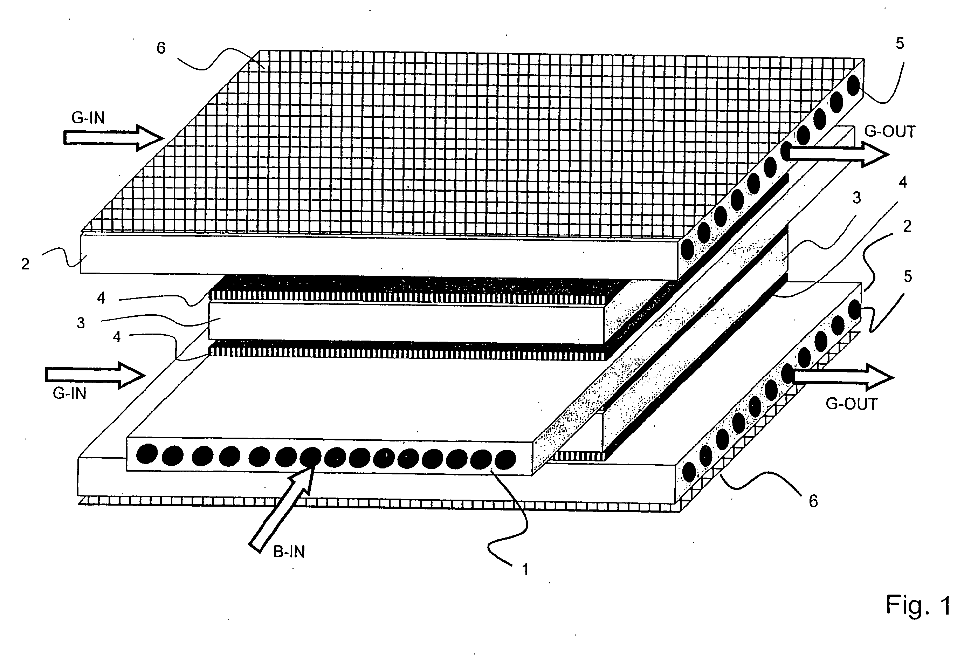

Die Figur 1 lässt eine perspektivische Ansicht des Schichtaufbaus einer Einzelzelle als Grundeinheit eines Brennstoffzellenmoduls erkennen, das im Wesentlichen aus einer kreuzweise übereinandergeschichteten Anodenplatte 1 und Kathodenplatte 2 mit dazwischen angeordnetem Elektrolytmaterial 3 aufgebaut ist.

Es ist jeweils eine Zwischenschicht 4 auf der Fläche zwischen Elektrolytmaterial 3 und Anodenplatte 1 bzw. Kathodenplatte 2 vorgesehen. Durch die Zwischenschichten 4 werden die Grenzwiderstände zwischen Elektrolytmaterial 3 und Anodenplatte 1 bzw. Kathodenplatte 2 reduziert, die Permeabilität erhöht und eine "Sollbruchstelle" im thermischen Gradienten geschaffen, so dass die Anoden- und Kathodenplatten 1, 2 bei unterschiedlicher Ausdehnung aufgrund thermischer Belastung unbeeinträchtigt bleiben.

Die Anoden- und Kathodenplatten 1, 2 haben in bekannter Weise integrierte parallel verlaufende Röhren 5 zur Durchleitung von Gas G oder Brennstoff B. Die Anodenplatten 1 können beispielsweise aus Ni-8YSZ-Cermet und die Kathodenplatten 2 aus Perowskit (LaSrCaMn03) gebrannt sein. Die Zwischenschicht 4 kann beispielsweise als Mischkathode aus 8YSZ-Perowskit oder ScSZ-Perowskit gebildet sein. Als Elektrolytmaterial 3 ist 8 YSR oder ScSZ geeignet. Die genannten Materialien sind aus der Brennstoffzellentechnologie hinreichend bekannt.

Mit Hilfe eines metallischen Leitgitters 6 auf der Oberseite der oberen Kathodenplatte 2 und auf der Unterseite der unteren Kathodenplatte 2 kann die effektive Leitfähigkeit $\sigma K$ der Kathode erhöht und in Balance zur Leitfähigkeit $\sigma A$ der Anodenplatte 1 gebracht werden. Als Leitgitter 6, sogenannte Interkonnektoren, können beispielsweise chromhaltige Stähle eingesetzt werden.

Das Problem besteht nämlich darin, dass die Leistungsfähigkeit einer Einzelzelle maßgeblich durch die geringe Elektronenleitfähigkeit einer rein keramischen Kathode aus LSM bestimmt und begrenzt ist. Der Stromfluss durch das Elektrolytmaterial 4 und durch eine Kathodenplatte 2 kann mit Hilfe der spezifischen Leitfähigkeiten $\sigma$ wie folgt gefasst werden:

für das Elektrolytmaterial:

$$I_E = U_E / R_E = (\sigma_E \times A_E / d_E) \times U_E$$

für die Kathodenplatte:

$$I_K = U_K / R_K = (\sigma_K \times A_K / d_K) \times U_K$$

mit den Variablen
I = Strom,
U = Spannungsabfall,
R = elektrischer Widerstand,
$\sigma$ = spezifische elektrische Leitfähigkeit,
A = elektrisch leitende Querschnittsfläche, und
d = Wegstrecke des elektrischen Widerstandes.

Da beide Ströme $I_E$ durch das Elektrolytmaterial 4 und $I_K$ durch die Kathodenplatte 2 identisch sein müssen, gilt nach Auflösung der obigen Gleichungen nach der elektrisch wirksamen Fläche der Kathodenplatte 2:

$$A_K = (\sigma_E / \sigma_K) \times (d_K / d_E) \times (U_E / U_K) \times A_E.$$

Für den Fall, dass die Kathodenplatte 2 nur aus LSM (z.B. Perowskit) hergestellt würde, ergäbe sich mit dem entsprechenden Werten für typische Leitfähigkeiten bei 1.000°C

$$\sigma_E = \sigma_{YSZ} \approx 20 \text{ S/m}$$

$$\sigma_K = \sigma_{LSM} \approx 20 * 10^3 \ S/m$$

und den geometrischen Daten der Einzelzelle

$$d_E = 100 \ \mu m$$

$$d_K \approx 10 \ cm$$

sowie einem typischen Verhältnis von

$$U_E / U_K \approx 1 \dots 10$$

ein Wert von:

$$A_{LSM} = (20 \ S/m \ / \ 20*10^3 \ S/m) \times (10*10^{-4} \ m \ / \ 10^2 * 10^{-6} \ m) \times (U_E / U_K) \times A_{YSZ}$$

$$A_{LSM} = (10^{-3-1+2} \times (U_E / U_K) \times A_{YSZ}$$

$$A_{LSM} / A_{YSZ} \approx 1 \dots 10.$$

Der leitende Querschnitt einer Kathodenplatte 2 aus LSM sollte somit etwa zehnmal größer sein, als der leitende Querschnitt des Elektrolytmaterials 4, um denselben Strom 1 durchleiten zu können. Es müsste also entweder der Querschnitt $A_K$ der Kathodenplatte 2 oder ihre spezifische Leitfähigkeit $\sigma_K$ um mehrere Größenordnungen angehoben werden. Da eine Vergrößerung des Querschnitts der Kathodenplatte 2 alleine nicht möglich ist, muss die effektive Leitfähigkeit $\sigma_{K,eff}$ der Kathodenplatte 2 erhöht und in Balance zur Leitfähigkeit der Anodenplatte 1 gebracht werden. Hierzu können hoch chromhaltige Stähle als metallische Leitgitter 6 eingesetzt werden. Für solche Stähle ergeben sich Werte von $\sigma_K = 2*10^6 \ S/m$ bei 1.000°C. Daraus folgt, dass der relevante Term in der oben genannten Gleichung

$$A_K = (\sigma_E / \sigma_K) \times (d_K / d_E) \times (U_E / U_K) \times A_E.$$

akzeptable Größenordnungen erreicht:

$$A_K = 10^{-5-1+4} \times (U_E / U_K) \times A_{YSZ}$$

$$A_{LSM} / A_{YSZ} \approx 10^{-1} \ldots 10^{-2}.$$

Das bedeutet, dass bei einer typischen Elektrolytfläche von etwa 100 cm$^2$ das metallische Leitgitter 6 eine Querschnittsfläche von etwa 1 bis 10 cm$^2$ annehmen müsste.

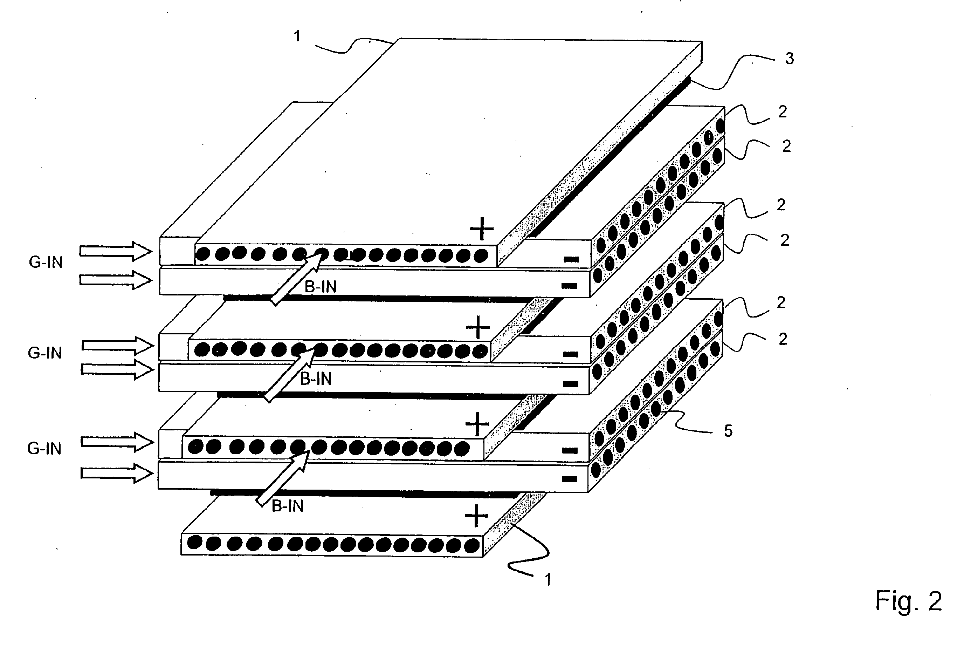

Die Figur 2 lässt eine Ausführungsform eines Brennstoffzellenmoduls mit einer Vielzahl kreuzweise gestapelter Anoden- und Kathodenplatten 1, 2 mit dazwischen liegender Elektrolytmaterial-Schicht 3 erkennen. In dem Ausführungsbeispiel sind jeweils zwei Kathodenplatten 2 mit einer zwischenliegenden nicht elektronenleitenden Schicht übereinander angeordnet, um die Leitfähigkeit anzupassen.

Aus den Figuren 1 und 2 ist erkennbar, dass die Anodenplatten 1 mit ihrer Längsachse in einem Winkel von etwa 90° gedreht zu der Längsachse der Kathodenplatten 2 angeordnet sind, so dass im Uhrzeigersinn gesehen die Stirnseiten der Anodenplatten 1 mit den Zufuhranschlüssen zu den Röhren 5, die Stirnseiten der Kathodenplatten 2 mit den Zufuhranschlüssen zu den Röhren 5, die Stirnseiten der Anodenplatten 1 mit den Abfuhranschlüssen zu den Röhren 5, und die Stirnseiten der Kathodenplatten 2 mit den Abfuhranschlüssen zu den Röhren 5 jeweils um 90° versetzt zueinander sind. Es ist also möglich auf jeder Stirnseite eines Brennstoffzellenmoduls jeweils einen einzigen Anschlussstutzen für die Gaszufuhr, die Gasabfuhr, die Brennstoffzufuhr oder die Brennstoffabfuhr vorzusehen. Zudem können die Anodenplatten 1 elektrisch parallel geschaltet und die Kathodenplatten 2 ebenfalls parallel zueinander geschaltet werden.

Die daraus resultierende geringe Ausgangsgleichspannung des Brennstoffzellenmoduls mit hoher Stromstärke im Vergleich zur herkömmlichen Serienschaltung kann durch eine Leistungselektronikschaltung mit Leistungshalbleitern kompensiert werden.

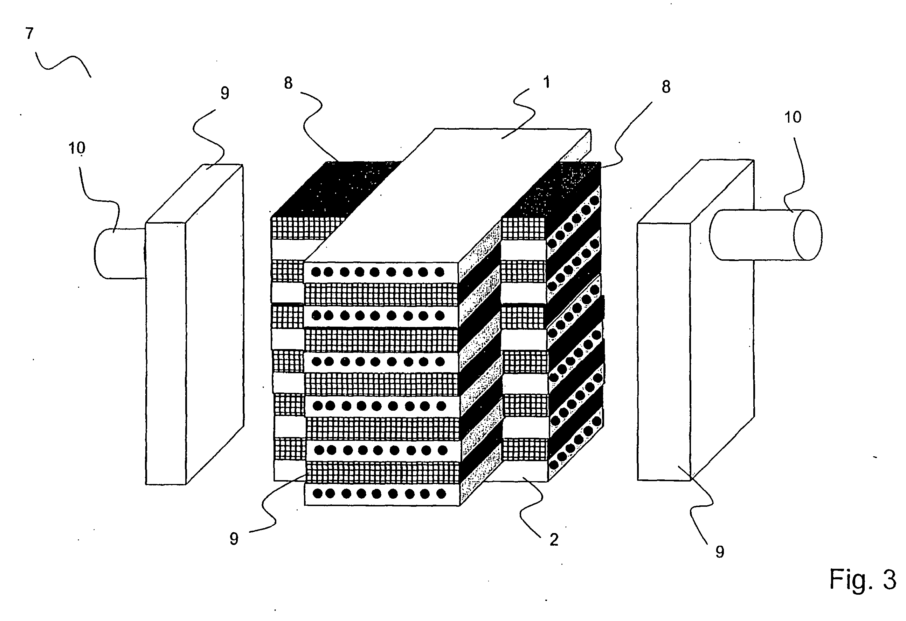

Die Figur 3 lässt ein Brennstoffzellenmodul 7 in perspektivischer Explosionsansicht erkennen, bei dem eine Vielzahl (vorzugsweise etwa jeweils 7) Anodenplatten 1 und Kathodenplatten 2 kreuzweise übereinandergestapelt sind. Die Elektrolyt- und Zwischenschichten 3, 4 sind nicht dargestellt. Es wird deutlich, dass in den Räumen zwischen den übereinanderliegenden Anschlussenden der Anoden- und Kathodenplatten 1, 2 elektrisch leitendes Füllmaterial 8 eingebracht ist, dass die Räume vollständig ausfüllt. Als Füllmaterial kann ein den Anoden- bzw. Kathodenplatten 1, 2 entsprechendes Material oder ein metallischer Schwamm oder metallischer Filz eingesetzt werden.

Durch die kreuzartige Architektur des Brennstoffzellenmoduls können die Anodenplatten 1 und Kathodenplatten 2 durch Anschlussstutzen 9 beispielsweise in Form metallischer Buchsen (ferritische Stähle) kompakt einheitlich versorgt sowie jeweils elektrisch parallel geschaltet werden. Dabei erfolgt die Zu- und Ableitung der Gase bzw. Brennstoffe für die Anodenplatten 1 und Kathodenplatten 2 getrennt mit Zu- und Abluftleitungen 10. Dies ist bei Brennstoffzellen systembedingt erforderlich. Die Anschlussstutzen der Anodenplatten 1 sind der Übersichtlichkeit halber nicht dargestellt, entsprechen aber den skizzierten Anschlussstutzen 9 für die Kathodenplatten 2. Die Anschlussstutzen 9 sollten korrosionsfest sein, obwohl das Produktwasser in den Anodenplatten 1 bei den im Betrieb vorherrschenden hohen Temperaturen kontinuierlich ausgetragen wird.

Vorteilhaft ist es, wenn eine Luftkühlung zum Austrag des Produktwassers genutzt würde. Dabei könnte auch eine Nutzung der Kondensationsenergie erfolgen.

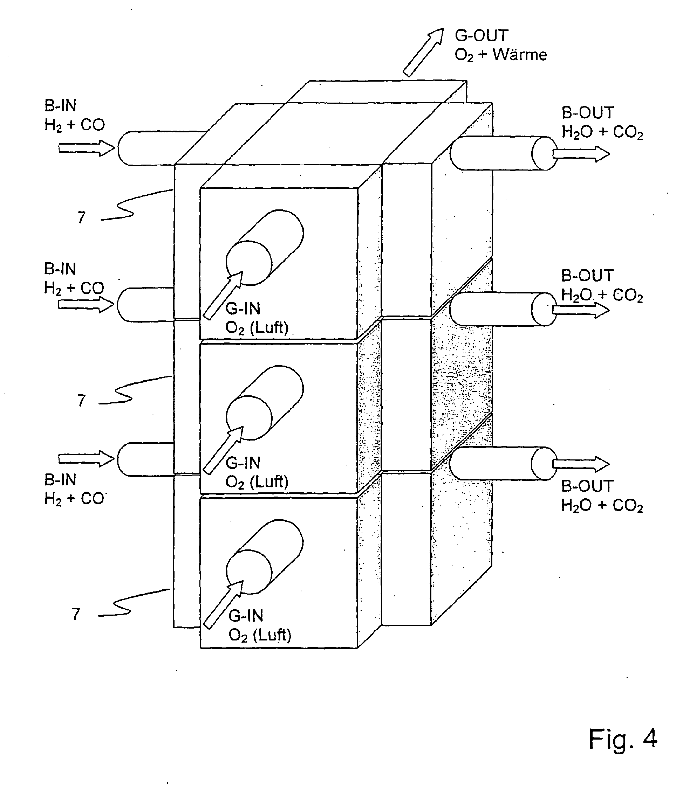

Die Figur 4 lässt eine perspektivische Ansicht einer Brennstoffzelle mit einer Vielzahl übereinander gestapelter in Reihe geschalteter Brennstoffzellenmodule 7 erkennen. Es wird deutlich, dass die Zufuhr B-IN von Brennstoff, beispielsweise von $H_2CO$, Methan oder Methanol o.ä., durch die Zufuhrleitung 10 des Anschlussstutzens 9 der Anodenplatten 1 erfolgt. Die Abfuhr des Brennstoffs nach der Reaktion, d.h. $H_2O + CO_2$ + Wärme erfolgt an der gegenüberliegenden Stirnseite der Anodenplatten 1. Die Zufuhr von Luft ($O_2$) erfolgt durch die Zufuhrleitung 10 des Anschlussstutzens 9 der Kathodenplatten 2 und die Abfuhr von an $O_2$ entreicherter Luft und von Wärme erfolgt an der gegenüberliegenden Stirnseite der Kathodenplatten 2.

Damit ist eine einfache Gasversorgung der Brennstoffzellenmodule 7 mit Luft von der einen Stirnseite und mit Brennstoff von der anderen um 90° versetzten Stirnseite auf nur zwei unterschiedlichen Wegen und eine entsprechende Abfuhr von Luft und Produktgas möglich. Hierdurch wird eine erhebliche Reduktion der Problematik der Gasdichtigkeit durch Reduzierung der Anzahl von Anschlüssen erreicht, da nicht mehr jede Anoden- und Kathodenplatte 1, 2 einzeln versorgt werden muss. Zudem können die Brennstoffzellenmodule 7 in der Brennstoffzelle in einem Gehäuse so untergebracht werden, dass eine permanente äußere Spülung um die Anschlussstutzen 9 herum nicht nur eine Kühlung - ein Energiemanagement - ermöglicht, sondern auch leichte, betriebsphasenbedingte Undichtigkeiten der Anschlussstutzen 9 tolerabel sein lässt.

Die Abnahme der elektrischen Leistung kann über die metallischen Anschlussstutzen 9 beispielsweise mit Druckkontakten realisiert werden. Die Spannung beträgt dabei etwa 0,7 bis 1 Volt pro Brennstoffzellenmodul mit parallel geschalteten Einzelzellen. Der Strom beträgt etwa 50 Ampere pro Brennstoffzellenmodul. Durch eine Reihenschaltung einer Vielzahl von Brennstoffmodulen 7 in einer Brennstoffzelle kann die Spannung auf etwa 10 Volt angehoben werden, ohne dass erhebliche strukturelle Probleme hinsichtlich Montage, Wartung und Betriebssicherheit in Kauf genommen werden müssen. Da die Parallelschaltung in den Brennstoffzellenmodulen 7 einen vollständigen Ausfall sehr unwahrscheinlich sein lässt, gewährleistet die Reihenschaltung der Brennstoffzellenmodule 7 dennoch einen relativ stabilen Betrieb.

**Patentansprüche**

1. Brennstoffzellenmodul (7) mit einer Vielzahl übereinander gestapelter permeabler Anoden- und Kathodenplatten (1, 2), mit Elektrolytmaterial (3) zwischen benachbarten Anoden- und Kathodenplatten (1, 2), und mit Anschlüssen an den Anoden- und Kathodenplatten (1, 2) zur Zu- und Abfuhr von Gas (G) und Brennstoff (B), wobei die Anodenplatten (1) elektrisch parallel und die Kathodenplatten (2) elektrisch parallel geschaltet sind, **dadurch gekennzeichnet, dass** die Anodenplatten (1) und Kathodenplatten (2) jeweils sich in Längsrichtung erstreckende parallele Röhren (5) zur Durchleitung von Gas (G) oder Brennstoff (B) haben, die Längsachsen der Anodenplatten (1) im Winkel versetzt zu den Längsachsen der Kathodenplatten (2) ausgerichtet sind, und metallische Anschlussstutzen (9) an den Stirnseiten der Anodenplatten (1) und Kathodenplatten (2) angeordnet sind, die mit den parallelen Röhren (5) jeweils zur Zufuhr (IN) oder Abfuhr (OUT) von Gas (G) oder Brennstoff kommunizieren, wobei die an einer gemeinsamen Stirnseite jeweils befindlichen Anodenplatten (1) oder Kathodenplatten (2) mit den Anschlussstutzen (9) elektrisch parallel geschaltet und an eine gemeinsame Zu- oder Ableitung (10) angeschlossen sind.

2. Brennstoffzellenmodul (7) nach Anspruch 1, **dadurch gekennzeichnet, dass** die Anoden- und Kathodenplatten (1.2) eine rechteckige Grundfläche mit im Verhältnis zu den Stirnseiten längeren Längsseiten haben, wobei die Anodenplatten (1) parallel zueinander und die Kathodenplatten (2) parallel zueinander ausgerichtet sind, und wobei die Längsachsen der Anodenplatten (1) im Winkel versetzt zu den Längsachsen der Kathodenplatten (2) ausgerichtet sind.

3. Brennstoffzellenmodul (7) nach Anspruch 2, **dadurch gekennzeichnet, dass** die Anoden- und Kathodenplatten (1, 2) kreuzartig zentriert angeordnet sind, wobei die Längsachsen der Anodenplatten (1) im rechten Winkel zu den Längsachsen der Kathodenplatten (2) ausgerichtet sind.

4. Brennstoffzellenmodul (7) nach einem der vorhergehenden Ansprüche, **dadurch gekennzeichnet, dass** an den Stirnseiten in den Räumen zwischen den übereinanderliegenden Anschlussenden der Anoden- oder Kathodenplatten (1, 2) elektrisch leitendes Füllmaterial (8) eingebracht ist, das die Räume vollständig ausfüllt.

5. Brennstoffzellenmodul (7) nach Anspruch 4, **dadurch gekennzeichnet, dass** die gemeinsame Zu- oder Ableitung (10) einen sich über die Höhe des Brennstoffzellenmoduls (7) und über die Breite der zugeordneten Stirnseite erstreckenden Anschlussstutzen (9) hat.

6. Brennstoffzellenmodul (7) nach einem der vorhergehenden Ansprüche, **dadurch gekennzeichnet, dass** die Anodenplatten (1) und die Kathodenplatten (2) auf den Oberflächen der rechteckigen Grundfläche eine elektrisch isolierende, ionenleitende Elektrolytschicht (3) haben.

7. Brennstoffzellenmodul (7) nach Anspruch 6, **dadurch gekennzeichnet, dass** die Elektrolytschicht (3) 8YSR oder ScSZ aufweist.

8. Brennstoffzellenmodul (7) nach einem der vorhergehenden Ansprüche, **dadurch gekennzeichnet, dass** zwischen übereinander angeordneten Anodenplatten (1) und Kathodenplatten (2) jeweils eine elektrisch isolierende, ionenleitende Zwischenschicht (4) angeordnet ist.

9. Brennstoffzellenmodul (7) nach Anspruch 8, **dadurch gekennzeichnet, dass** die Zwischenschicht (4) Nickel-8YSR oder $CeO_x/Ni$ aufweist.

10. Brennstoffzellenmodul (7) nach einem der vorhergehenden Ansprüche, **dadurch gekennzeichnet, dass** die Anodenplatten (1) Nickel-Cermet aufweisen.

11. Brennstoffzellenmodul nach einem der vorhergehenden Ansprüche, **dadurch gekennzeichnet, dass** die Kathodenplatten Perowskit ($La_xSr_y$-$Ca_zMnO_3$) aufweisen.

12. Brennstoffzellenmodul (7) nach einem der vorhergehenden Ansprüche mit einer Leistungselektronikschaltung mit einem Strom-Spannungswandler zur Spannungsanhebung.

13. Brennstoffzellenbatterie mit mindestens zwei Brennstoffzellenmodulen (7) nach einem der vorhergehenden Ansprüche, **dadurch gekennzeichnet, dass** die Brennstoffzellenmodule (7) elektrisch in Reihe geschaltet sind.

14. Brennstoffzellenbatterie nach Anspruch 13, **dadurch gekennzeichnet, dass** die Brennstoffzellenmodule (7) übereinander gestapelt sind.

## Claims

1. A fuel cell module (7) having a large number of permeable anode and cathode plates (1, 2) which are stacked one on top of the other, having electrolyte material (3) between adjacent anode and cathode plates (1, 2), and having connections to the anode and cathode plates (1, 2) for supplying and carrying away gas (G) and fuel (B), with the anode plates (1) being connected electrically in parallel and the cathode plates (2) being connected electrically in parallel, **characterized in that** the anode plates (1) and cathode plates (2) each have parallel tubes (5) which extend in the longitudinal direction for gas (G) or fuel (B) to pass through, the longitudinal axes of the anode plates (1) are aligned offset at an angle to the longitudinal axes of the cathode plates (2), and metallic connecting stubs (9) are arranged on the end faces of the anode plates (1) and cathode plates (2) and each communicate with the parallel tubes (5) for supplying (IN) or carrying away (OUT) gas (G) or fuel, with those anode plates (1) or cathode plates (2) which are in each case located on a common end face being connected electrically in parallel to the connecting stubs (9), and being connected to a common supply line or outlet line (10).

2. The fuel cell module (7) as claimed in claim 1, **characterized in that** the anode and cathode plates (1, 2) have a rectangular base area with longitudinal faces which are longer than the end faces, with the anode plates (1) being aligned parallel to one another and the cathode plates (2) being aligned parallel to one another, and with the longitudinal axes of the anode plates (1) being aligned offset at an angle to the longitudinal axes of the cathode plates (2).

3. The fuel cell module (7) as claimed in claim 2, **characterized in that** the anode and cathode plates (1, 2) are arranged centered in a cruciform shape, with the longitudinal axes of the anode plates (1) being aligned at right angles to the longitudinal axes of the cathode plates (2).

4. The fuel cell module (7) as claimed in one of the preceding claims, **characterized in that** electrically conductive filling material (8) is introduced at the end faces into the spaces between those connecting ends of the anode or cathode plates (1, 2) which are located one on top of the other, and completely fills the spaces.

5. The fuel cell module (7) as claimed in claim 4, **characterized in that** the common supply line or outlet line (10) has a connecting stub (9) which extends over the height of the fuel cell module (7) and over the width of the associated end face.

6. The fuel cell module (7) as claimed in one of the preceding claims, **characterized in that** the anode plates (1) and the cathode plates (2) have an electrically insulating, ion-conducting electrolyte layer (3) on the surfaces of the rectangular base area.

7. The fuel cell module (7) as claimed in claim 6, **characterized in that** the electrolyte layer (3) has 8YSR or ScSZ.

8. The fuel cell module (7) as claimed in one of the preceding claims, **characterized in that** an electrically insulating, ion-conducting intermediate layer (4) is in each case arranged between anode plates (1) and cathode plates (2) which are arranged one on top of the other.

9. The fuel cell module (7) as claimed in claim 8, **characterized in that** the intermediate layer (4) has nickel-8YSR or $CeO_x/Ni$.

10. The fuel cell module (7) as claimed in one of the preceding claims, **characterized in that** the anode plates (1) have nickel cermet.

11. The fuel cell module as claimed in one of the preceding claims, **characterized in that** the cathode plates have

perovskite ($La_xSr_yCa_zMnO_3$).

12. The fuel cell module (7) as claimed in one of the preceding claims, having a power electronics circuit with a current/ voltage converter for increasing the voltage.

13. A fuel cell battery having at least two fuel cell modules (7) as claimed in one of the preceding claims, **characterized in that** the fuel cell modules (7) are electrically connected in series.

14. The fuel cell battery as claimed in claim 13, **characterized in that** the fuel cell modules (7) are stacked one on top of the other.

**Revendications**

1. Module de pile à combustible (7) comprenant une pluralité de plaques anode et cathode (1, 2) perméables empilées les unes sur les autres, un matériau électrolyte (3) entre plaques anode et cathode (1, 2) voisines, et des raccordements aux plaques anode et cathode (1, 2) pour l'entrée et la sortie de gaz (G) et de combustible (B), dans lequel les plaques anode (1) sont connectées électriquement en parallèle et les plaques cathode (2) sont connectées électriquement en parallèle, **caractérisé en ce que** les plaques anode (1) et les plaques cathode (2) comportent chacune pour le passage de gaz (G) ou de combustible (B), des tubes parallèles (5) s'étendant dans le sens de la longueur, **en ce que** les axes longitudinaux des plaques anode (1) sont orientés avec un décalage angulaire par rapport aux axes longitudinaux des plaques cathode (2), et **en ce que** sur les côtés frontaux des plaques anode (1) et plaques cathode (2), sont agencés des embouts de raccordement métalliques (9) qui communiquent avec les tubes parallèles (5) respectivement pour l'entrée (IN) ou la sortie (OUT) de gaz (G) ou de combustible, où les plaques anode (1) ou plaques cathode (2) se trouvant chacune en un côté frontal commun sont connectées électriquement en parallèle avec les embouts de raccordement (9) et sont raccordées à une conduite commune (10) d'arrivée ou de départ.

2. Module de pile à combustible (7) selon la revendication 1, **caractérisé en ce que** les plaques anode et cathode (1, 2) ont une face de base rectangulaire avec des côtés longitudinaux relativement longs par rapport aux côtés frontaux, où les plaques anode (1) sont orientées parallèlement les unes aux autres et les plaques cathode (2) sont orientées parallèlement les unes aux autres, et où les axes longitudinaux des plaques anode (1) sont orientés avec un décalage angulaire par rapport aux axes longitudinaux des plaques cathode (2).

3. Module de pile à combustible (7) selon la revendication 2, **caractérisé en ce que** les plaques anode et cathode (1, 2) sont agencées de façon centrée et en croix, où les axes longitudinaux des plaques anode (1) sont orientés en faisant un angle droit avec les axes longitudinaux des plaques cathode (2).

4. Module de pile à combustible (7) selon l'une des revendications précédentes, **caractérisé en ce qu'**un matériau de remplissage (8) électriquement conducteur est rapporté aux côtés frontaux dans les espaces entre les extrémités de raccordement superposées des plaques anode ou cathode (1, 2), ce matériau remplissant entièrement lesdits espaces.

5. Module de pile à combustible (7) selon la revendication 4, **caractérisé en ce que** la conduite commune d'arrivée ou de départ (10) a un embout de raccordement (9) s'étendant sur la hauteur du module de pile à combustible (7) et sur la largeur du côté frontal associé.

6. Module de pile à combustible (7) selon l'une des revendications précédentes, **caractérisé en ce que** les plaques anode (1) et les plaques cathode (2) ont une couche électrolyte (3), conductrice d'ions, électriquement isolante, sur les surfaces des faces de base rectangulaires.

7. Module de pile à combustible (7) selon la revendication 6, **caractérisé en ce que** la couche électrolyte (3) comporte du 8YSR ou ScSZ.

8. Module de pile à combustible (7) selon l'une des revendications précédentes, **caractérisé en ce qu'**une couche intermédiaire (4) conductrice d'ions, électriquement isolante, est agencée à chaque fois entre les plaques anode (1) et les plaques cathode (2) agencées les unes au-dessus des autres.

9.  Module de pile à combustible (7) selon la revendication 8, **caractérisé en ce que** la couche intermédiaire (4) comporte du Nickel-8YSR ou du CeO$_{x/}$Ni.

10. Module de pile à combustible (7) selon l'une des revendications précédentes, **caractérisé en ce que** les plaques anode (1) comportent du Nickel-Cermet.

11. Module de pile à combustible selon l'une des revendications précédentes, **caractérisé en ce que** les plaques cathode (2) comportent de la perowskite (La$_x$Sr$_y$Ca$_2$MnO$_3$).

12. Module de pile à combustible (7) selon l'une des revendications précédentes, comportant un circuit électronique de puissance avec un convertisseur courant-tension pour augmenter la tension.

13. Batterie de pile à combustible comportant au minimum deux modules de pile à combustible (7) selon l'une des revendications précédentes, **caractérisée en ce que** les modules de pile à combustible (7) sont connectés électriquement en série.

14. Batterie de pile à combustible selon la revendication 13, **caractérisée en ce que** les modules de pile à combustible (7) sont empilés les uns au-dessus des autres.

Fig. 1

Fig. 2

EP 1 665 443 B1

Fig. 3

G-OUT
$O_2$ + Wärme

B-IN
$H_2$ + CO

B-OUT
$H_2O$ + $CO_2$

7

B-IN
$H_2$ + CO

G-IN
$O_2$ (Luft)

B-OUT
$H_2O$ + $CO_2$

7

B-IN
$H_2$ + CO

G-IN
$O_2$ (Luft)

B-OUT
$H_2O$ + $CO_2$

7

G-IN
$O_2$ (Luft)

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0947019 B1
- DE 4011506 A1
- WO 0129923 A1
- US 5069985 A
- US 20030044657 A1
- US 4623596 A
- US 4345009 A
- DE 19639517